# EUROPEAN PATENT APPLICATION

(11) **EP 3 575 221 A1**
(43) Date of publication of application: **04.12.2019**
(21) Application number: 19175520.6
(22) Date of filing: 21.05.2019
(51) Int. Cl.: B64D 45/00, B64C 25/28

(54) **SYSTEM FOR DETECTING UPLOCK SYSTEM INTEGRITY**

(30) Priority: 22.05.2018 GB 201808382
(71) Applicant: Airbus Operations Limited, Bristol BS34 7PA (GB)
(72) Inventor: KERR, Sean, Bristol, Avon BS34 7PA (GB); MARLES, David, Bristol, Avon BS34 7PA (GB)
(74) Representative: EIP

(57) **Abstract**

Disclosed is a detection system (100) for detecting the integrity of an uplock system of a landing gear system (10), the landing gear system comprising an element (20, 30) that is movable between a first position and a second position, and an uplock system comprising an engager (21, 31) and an uplock (25, 35), wherein the engager is connected to the element, and wherein the uplock is switchable from an unlocked state, in which the uplock is disengaged from the engager, to a locked state to engage with the engager to lock the element in the first position. The detection system (100) comprises: an uplock sensor (110) configured to detect whether the uplock is in the unlocked state or the locked state and to issue a first signal indicating whether the uplock is in the unlocked state or the locked state; one or more sensors (120) configured to detect a parameter of the landing gear system and to issue a second signal to indicate the parameter detected; and a controller (130) configured to issue a warning when the controller determines, based on the first signal and the second signal, that the uplock is in the locked state and the parameter detected indicates that the element is not in the first position, the warning indicating a loss of integrity of the uplock. Also disclosed is a landing gear system (10), a method (300) of detecting the integrity of an uplock system of a landing gear system (10) of an aircraft, a non-transitory computer-readable storage medium (400), and an aircraft (500).

## Description

### TECHNICAL FIELD

The present invention relates to a detection system for detecting the integrity of an uplock system of an aircraft landing gear system.

### BACKGROUND

Conventionally, a landing gear of an aircraft is held in an extended position when the aircraft is on the ground, and is retracted to a stowed position in a landing gear bay once the aircraft has taken off. The landing gear subsequently is extended to the extended position again before the aircraft lands. Movement of the landing gear between the stowed position and the extended position is typically controlled by a pilot using cockpit controls of the aircraft, such as a landing gear lever.

During flight, the landing gear conventionally is held in the retracted position by a landing gear uplock, and one or more landing gear actuators used for actuating the landing gear are depressurised until the landing gear is to be extended to the extended position again before the aircraft lands. The landing gear uplock system prevents the landing gear from resting on a landing gear bay door when the landing gear actuators are depressurised.

A landing gear door is typically employed to at least partially cover the landing gear bay opening when the landing gear is in the stowed position and when the landing gear is in the extended position. The landing gear door is movable between a closed position, in which the door at least partially covers the landing gear bay opening, and an open position, in which the door exposes the landing gear bay opening so that the landing gear can move between the extended and stowed positions. In some aircraft, the landing gear door is opened prior to movement of the landing gear between the stowed position and the extended position, and closed again once the landing gear has reached the desired extended or stowed position. In other aircraft, the landing gear door is driven by movement of the landing gear.

During flight, the landing gear door conventionally is held in the closed position by a door uplock, and one or more landing gear door actuators used for moving the landing gear door are depressurised until the landing gear door is to be moved to the open position. The door uplock prevents the landing gear bay door from opening when the landing gear door actuators are depressurised.

### SUMMARY

A first aspect of the present invention provides a detection system for detecting the integrity of an uplock system of a landing gear system, the landing gear system comprising an element that is movable between a first position and a second position, and an uplock system comprising an engager and an uplock, wherein the engager is connected to the element, and wherein the uplock is switchable from an unlocked state, in which the uplock is disengaged from the engager, to a locked state to engage with the engager to lock the element in the first position. The detection system comprises: an uplock sensor configured to detect whether the uplock is in the unlocked state or the locked state and to issue a first signal indicating whether the uplock is in the unlocked state or the locked state, one or more sensors configured to detect a parameter of the landing gear system and to issue a second signal to indicate the parameter detected, and a controller configured to issue a warning when the controller determines, based on the first signal and the second signal, that the uplock is in the locked state and the parameter detected indicates that the element is not in the first position, the warning indicating a loss of integrity of the uplock system.

Optionally, the element is movable between the first position and the second position by rotation about a pivot, wherein the parameter comprises rotation of the element about the pivot, and the controller is configured to issue the warning when the controller determines, based on the first signal and the second signal, that the uplock is in the locked state and the element is at an angle of rotation about the pivot that meets a predetermined element rotation criterion.

Optionally, the one or more sensors comprise one or more of: a proximity sensor, a switch, a rotary variable differential transformer, a linear variable differential transformer, a strain gauge, a pressure sensor and a flow meter.

Optionally, the parameter comprises a strain in the element, and the controller is configured to issue the warning when the controller determines, based on the first signal and the second signal, that the uplock is in the locked state and the strain in the element meets a predetermined element strain criterion.

Optionally, the parameter comprises a strain in the uplock, and the controller is configured to issue the warning when the controller determines, based on the first signal and the second signal, that the uplock is in the locked state and the strain in the uplock meets a predetermined uplock strain criterion.

Optionally, the landing gear system comprises an actuation system configured to move the element between the first position and the second position, the actuation system comprising an actuator, wherein the actuator is depressurised when the element is locked in the first position by the uplock, the parameter comprises a characteristic of the actuation system, and the controller is configured to issue the warning when the controller determines, based on the first signal and second signal, that the uplock is in the locked state and the characteristic of the actuator meets a predetermined actuator criterion.

Optionally, the characteristic of the actuation system comprises a strain in the actuator, and the controller is configured to issue the warning when the controller determines, based on the first signal and second signal, that the uplock is in the locked state and the strain in the actuator meets a predetermined actuator strain criterion.

Optionally, the actuation system comprises an actuator supply line for supplying fluid to the actuator, the characteristic of the actuation system comprises pressure in the actuator and/or in the actuator supply line, and the controller is configured to issue the warning when the controller determines, based on the first signal and second signal, that the uplock is in the locked state and pressure in the actuator and/or in the actuator supply line meets a predetermined pressure criterion.

Optionally, the actuation system comprises an actuator supply line for supplying fluid to the actuator, the characteristic of the actuation system comprises a flow rate in the actuator and/or the actuator supply line, and the controller is configured to issue the warning when the controller determines, based on the first signal and second signal, that the uplock is in the locked state and the flow rate meets a predetermined flow rate criterion.

Optionally, the element is a landing gear door, and the first position is a closed position of the door relative to a landing gear bay and the second position is an open position of the door relative to the landing gear bay, and the uplock is a landing gear door uplock.

Optionally, the element is a landing gear, and the first position is a stowed position of the landing gear relative to a landing gear bay and the second position is an extended position of the landing gear relative to the landing gear bay, and the uplock is a landing gear uplock.

Optionally, the landing gear system comprises a landing gear door movable between a closed position in which the landing gear door at least partially covers an opening of the landing gear bay in which the landing gear is located when the landing gear is in the stowed position, and an open position in which the landing gear is moveable through the opening between the stowed position and the extended position, the parameter comprises a strain in the landing gear door, and the controller is configured to issue the warning when the controller determines, based on the first signal and the second signal, that the uplock is in the locked state and the strain in the landing gear door meets a predetermined landing gear door strain criterion.

Optionally, the one or more sensors comprises a switch configured to be activated by pressure being applied to the switch, the switch is positioned on the landing gear door at a position at which the landing gear contacts the landing gear door if the uplock fails to retain the landing gear in the stowed position, and the controller is configured to issue the warning when the controller determines, based on the first signal and the second signal, that the uplock is in the locked state and the switch is activated.

Optionally, the landing gear system is configured to switch the uplock from the locked state to the unlocked state only when the landing gear door is in the open position, the detection system comprises a door sensor configured to issue a door open signal when the door sensor detects that the landing gear door is in the open position, and the controller is configured to issue the warning when the controller determines, based on the first signal, the second signal and the door open signal, that, before the controller received the door open signal, the landing gear was not in the stowed position when the uplock was in the locked state.

A second aspect of the present invention provides a detection system for detecting failure of a landing gear uplock system, the landing gear uplock system comprising a landing gear uplock and an engager, the engager being connected to a landing gear, and the landing gear uplock configured, in a locked position, to engage with the engager to hold the landing gear in an up and locked position. The detection system comprises: a first detector to detect a position of the uplock and to emit a first indication indicating the position of the uplock, a second detector to detect that the landing gear has moved from the up and locked position and to emit a second indication indicating that the landing gear has moved from the up and locked position, and a controller configured to issue a failure warning if it is determined, based on the first and second indications, that the landing gear uplock is in the locked position and the landing gear is not in the up and locked position.

A third aspect of the present invention provides a landing gear system comprising the detection system according to the first aspect or the second aspect of the present invention.

A fourth aspect of the present invention provides a method of detecting the integrity of an uplock system of a landing gear system of an aircraft, the landing gear system comprising an element that is movable between a first position and a second position, and an uplock system comprising an engager and an uplock, wherein the engager is connected to the element, and wherein the uplock is switchable from an unlocked state to a locked state to engage with the engager to lock the element in the first position. The method comprises: determining whether the uplock is in the unlocked state or the locked state based on a first signal received from an uplock sensor, detecting a parameter of the landing gear system based on a second signal received from a landing gear sensor, and issuing a warning when it is determined, based on the first signal and the second signal, that the uplock is in the locked state and the parameter detected indicates that the element is not in the first position.

Optionally, the method comprises: detecting a parameter of a further landing gear system based on a third signal received from a further landing gear sensor of the further landing gear system, comparing the third signal to the second signal, and issuing the warning when the third signal differs from the second signal by at least a predetermined amount.

A fifth aspect of the present invention provides a non-transitory computer-readable storage medium storing instructions that, if executed by a processor of a controller of a landing gear system of an aircraft, cause the processor to carry out the method according to the fourth aspect of the present invention.

A sixth aspect of the present invention provides an aircraft comprising a detection system according to the first aspect or the second aspect of the present invention, or comprising a landing gear system according the third aspect of the present invention, or comprising a non-transitory computer-readable storage medium according the fifth aspect of the present invention.

### BRIEF DESCRIPTION OF THE DRAWINGS

Embodiments of the invention will now be described, by way of example only, with reference to the accompanying drawings, in which:
Figure 1a is a schematic view of a landing gear system comprising a detection system according to an embodiment of the present invention, the landing gear system comprising a landing gear shown in a first position;
Figure 1b is a schematic view of the landing gear system of Figure 1a, wherein the landing gear has moved away from the first position;
Figure 2a is a schematic view of a landing gear system comprising a detection system according to another embodiment of the present invention, the landing gear system comprising a landing gear door shown in a first position;
Figure 2b is a schematic view of the landing gear system of Figure 2a, wherein the landing gear door has moved away from the first position;
Figure 3 is a flow diagram showing an example of a method according to an embodiment of the present invention;
Figure 4 is a schematic diagram of an example of a non-transitory computer-readable storage medium according an embodiment of the present invention; and
Figure 5 is a schematic front view of an example of an aircraft according to an embodiment of the present invention.

### DETAILED DESCRIPTION

An aircraft landing gear system typically comprises one or more elements that are movable between a first position and a second position. Example such elements are: (a) a landing gear that is movable between a first, stowed position relative to a landing gear bay and a second, extended position relative to the landing gear bay, and (b) a landing gear door that is movable between a first, closed position relative to a landing gear bay and a second, open position relative to the landing gear bay. The landing gear door is a door of a landing gear bay for accommodating the landing gear in the stowed position. In the closed position of the landing gear door, the landing gear door at least partially covers an opening of the landing gear bay. In the open position of the landing gear door, the landing gear is movable through the opening between the stowed position and the extended position.

In some aircraft, each of the one or more elements is held in the first position by an uplock of a respective uplock system. Each respective uplock is switchable between an unlocked state and a locked state to lock the respective element in the first position. Each uplock system comprises an engager connected to an element, and the uplock of the uplock system is configured to be disengaged from the engager in the unlocked state and to engage with the engager in the locked state to lock the element in the first position. In some cases, the unlocked and locked states of an uplock are different positions of the uplock, and the uplock is movable between those two positions.

It is to be noted that the term "uplock" as used herein is to be interpreted to mean a landing gear uplock or a landing gear door uplock, unless it is stated which of these specific types of uplock is the subject of discussion.

Loss of integrity of an uplock system when the uplock is in the locked state could result in the element no longer being held in the first position by the uplock when it should be. Such a loss of integrity could, for example, comprise a bending, breakage or other physical failure of the uplock. Alternatively, a loss of integrity could, for example, comprise a bending, breakage or other physical failure of the engager. Such a loss of integrity may not be apparent from the cockpit or from outside the aircraft.

A loss of integrity of a landing gear door uplock system may result in the landing gear door moving under gravity from the closed position towards the open position. This could result in the door being positioned in the air flow over the aircraft. In turn, this may result in reduced aircraft performance, and increase the risk of damage to the door and the landing gear that is stowed in the landing gear bay with which the door is associated. There is therefore a need for a way to identify a loss of integrity of a landing gear door uplock system.

A landing gear actuator, which controls movement of the landing gear between the extended position and the stowed position, may be depressurised when the landing gear is locked in the stowed position by a landing gear uplock system. Therefore, a loss of integrity of the landing gear uplock system may result in the landing gear moving under gravity to rest on the landing gear door. Whilst the landing gear door is configured to withstand the weight of the landing gear, a failure in the landing gear door whilst the landing gear is resting on the landing gear door may result in an uncommanded extension of the landing gear. There is therefore a need for a way to identify a loss of integrity of a landing gear uplock system.

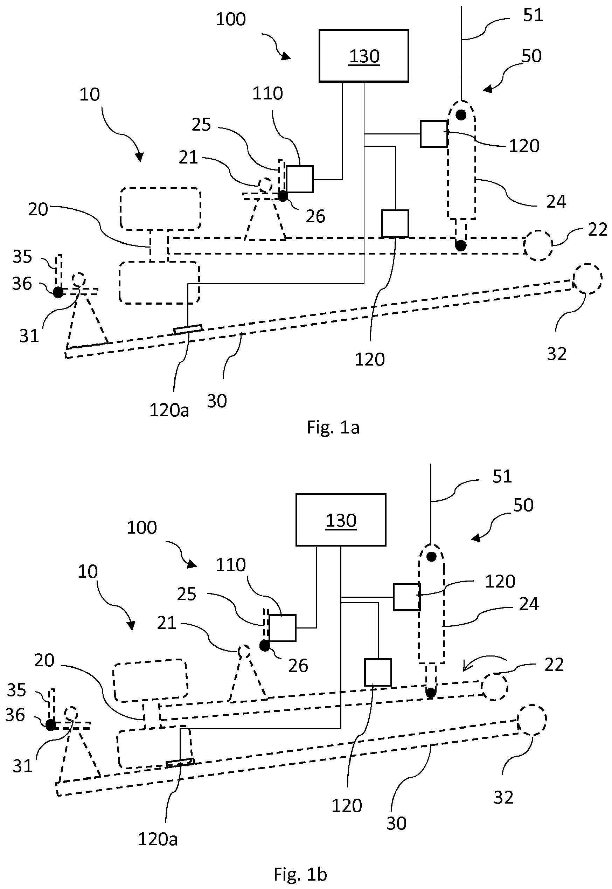

Figures 1a and 1b show schematic views of a landing gear system 10 (shown in dashed lines) comprising a detection system 100 according to an embodiment of the present invention. The landing gear system 10 comprises a landing gear 20 that is movable between a first, stowed position (as shown in Figure 1a) and a second, extended position. In the embodiment shown in Figures 1a and 1b, the landing gear 20 is movable between the stowed position and the extended position by rotation about a pivot 22. In other embodiments, the movement may be other than a rotation, such as a translation or a combination of a rotation and a translation. The landing gear system 10 comprises a landing gear uplock system comprising a landing gear uplock 25 that is switchable between a locked state and an unlocked state. The landing gear uplock system also comprises a landing gear engager 21 that is connected to the landing gear 20. The landing gear uplock 25 is configured to be disengaged from the landing gear engager 21 in the unlocked state and to engage with the landing gear engager 21 (as shown in Figure 1a) in the locked state to lock the landing gear 20 in the stowed position. In the embodiment shown in Figures 1a and 1b, the landing gear uplock 25 is movable between a locked position (as shown in Figure 1a) and an unlocked position. The landing gear uplock 25 is configured to move to the locked position to engage with the landing gear engager 21 to lock the landing gear 20 in the stowed position. By way of example, the landing gear engager 21 may be a pin or roller configured to engage with the landing gear uplock 25 to hold the landing gear in the stowed position.

The landing gear system 10 comprises a landing gear door 30 that is movable between a first, closed position (as shown in Figures 1a and 1b) and a second, open position. The landing gear door 30 is a door of a landing gear bay for accommodating the landing gear 20 in the stowed position. In the closed position of the landing gear door 30, the landing gear door at least partially covers an opening of the landing gear bay. In the open position of the landing gear door 30, the landing gear 20 is movable through the opening between the stowed position and the extended position. In the embodiment shown in Figures 1a and 1b, the landing gear door 30 is movable between the closed position and the open position by rotation about a pivot 32. In other embodiments, the movement may be other than a rotation, such as a translation or a combination of a rotation and a translation.

The landing gear system 10 comprises a landing gear door uplock system comprising a landing gear door uplock 35 that is switchable between a locked state and an unlocked state. The landing gear door uplock system comprises a landing gear door engager 31 that is connected to the landing gear door 30. The landing gear door uplock 35 is configured to be disengaged from the landing gear door engager 31 in the unlocked state and to engage with the landing gear door engager 31 (as shown in Figures 1a and 1b) in the locked state to lock the landing gear door 30 in the closed position. In the embodiment shown in Figures 1a and 1b, the landing gear door uplock 35 is movable between a locked position (as shown in Figures 1a and 1b) and an unlocked position. The landing gear door uplock 35 is configured to move to the locked position to engage with the landing gear door engager 31 to lock the landing gear door 30 in the closed position. In some embodiments, the landing gear door 30 and landing gear door uplock system may be omitted. By way of example, the landing gear door engager 31 may be a pin or roller configured to engage with the landing gear door uplock 35 to hold the landing gear door in the closed position.

By way of example only, the uplocks 25, 35 are movable between their respective locked positions and unlocked positions about respective pivots 26, 36. One or more landing gear uplock actuators (not shown) may be configured to move the landing gear uplock 25 between the locked position and the unlocked position. Similarly, one or more landing gear door uplock actuators (not shown) may be configured to move the landing gear door uplock 35 between the locked position and the unlocked position. In some examples, one or each of the uplocks 25, 35 is spring-loaded.

An uplock system may, for example, lose integrity due to a failure of a hook of the uplock 25, 35, which holds the landing gear 20 or landing gear door 30 in the first position, or a failure of the pivot 26, 36 about which the uplock 25, 35 may rotate. An uplock system may, for example, lost integrity due to a failure of the engager 21, 31 that engages with the uplock 25, 35 in the locked position of the uplock 25, 35.

The detection system 100 comprises an uplock sensor 110 configured to detect whether the landing gear uplock 25 is in the unlocked state or the locked state and to issue a first signal indicating whether the landing gear uplock 25 is in the unlocked state or the locked state. In some embodiments, the uplock sensor 110 comprises a proximity sensor and is configured to issue the first signal when the proximity sensor detects that the landing gear uplock 25 is in the locked position.

The detection system 100 comprises one or more sensors 120, each configured to detect a parameter of the landing gear system 10 and to issue a second signal to indicate the parameter detected. In the embodiment shown in Figures 1a and 1b, at least one of the one or more sensors 120 is configured to detect a parameter of the landing gear 20.

The detection system 100 comprises a controller 130 configured to issue a warning when the controller 130 determines, based on the first signal and the second signal, that the landing gear uplock 25 is in the locked state and the parameter detected indicates that the landing gear 20 is not in the first (i.e. stowed) position. The warning indicates a loss of integrity of the landing gear uplock system. The warning may be communicated to the cockpit of the aircraft to provide an indication to the aircraft crew. For example, the indication may be a visual, audible or tactile indication. Corrective action may be taken as a result of the warning. For example, the landing gear may be returned to the stowed position by actuating a landing gear actuator 24. The warning may be communicated to an aircraft maintenance crew so that investigation and maintenance can be carried out on the landing gear uplock system.

Figure 1a shows the landing gear 20 being held in the stowed position by the landing gear uplock 25 and the landing gear engager 21. Figure 1b shows the landing gear 20 resting on the landing gear door 30 because the landing gear uplock 25 has lost integrity. For example, the landing gear uplock 25 and/or the landing gear engager 21 may have become bent, broken or otherwise physically failed, in such a way that the uplock sensor 110 still senses a part of the landing gear uplock 25 that suggests the (whole) landing gear uplock 25 in the locked state, yet the landing gear uplock 25 actually is not correctly holding the landing gear 20 in the stowed position. The detection system 100 of Figures 1a and 1b is configured to issue the warning when the landing gear system 10 is in the state shown in Figure 1b, and not when the landing gear system 10 is in the state shown in Figure 1a.

In some embodiments, the parameter detected by the one or more sensors 120 comprises rotation of the landing gear 20 about the pivot 22. The landing gear 20 may rotate about the pivot 22 under gravity in the event of a loss of integrity of the landing gear uplock system. In such embodiments, the controller 130 is configured to issue the warning when the controller 130 determines, based on the first signal and the second signal, the landing gear uplock 25 is in the locked state and that the landing gear 20 is at an angle of rotation about the pivot 22 that meets a predetermined landing gear rotation criterion. In some embodiments, the predetermined landing gear rotation criterion may be that the angle of rotation is equal to a predetermined angle. In some embodiments, the predetermined landing gear rotation criterion may be that the angle of rotation is less than a predetermined angle. In some embodiments, the predetermined landing gear rotation criterion may be that the angle of rotation is greater than a predetermined angle. In some embodiments, the predetermined landing gear rotation criterion may be that the angle of rotation has changed by a predetermined amount over a predetermined period of time. By way of example only, rotation of the landing gear 20 about the pivot 22 may be measured by a proximity sensor, a rotary variable differential transformer (RVDT) or a linear variable differential transformer (LVDT).

In some embodiments, the parameter detected by the one or more sensors 120 comprises a strain in the landing gear 20. In the event of a loss of integrity of the landing gear uplock system, the forces on the landing gear 20 are detectably changed. In such embodiments, the controller 130 is configured to issue the warning when the controller 130 determines, based on the first signal and the second signal, that the landing gear uplock 25 is in the locked state and the strain in the landing gear 20 meets a predetermined landing gear strain criterion. In some embodiments, the predetermined landing gear strain criterion may be that landing gear strain is equal to a predetermined landing gear strain. In some embodiments, the predetermined landing gear strain criterion may be that the landing gear strain is less than a predetermined landing gear strain. In some embodiments, the predetermined landing gear strain criterion may be that the landing gear strain is greater than a predetermined landing gear strain. In some embodiments, the predetermined landing gear strain criterion may be that the landing gear strain has changed by a predetermined amount over a predetermined period of time. By way of example only, a strain may be measured by a strain gauge.

In some embodiments, the parameter detected by the one or more sensors 120 comprises a strain in the landing gear door 30. In the event of a loss of integrity of the landing gear uplock system, the forces on the landing gear door 30 may be detectably changed by the landing gear 20 resting on the landing gear door 30. In such embodiments, the controller 130 is configured to issue the warning when the controller 130 determines, based on the first signal and the second signal, that the landing gear uplock 25 is in the locked state and the strain in the landing gear door 30 meets a predetermined landing gear door strain criterion. In some embodiments, the predetermined landing gear door strain criterion may be that landing gear door strain is equal to a predetermined landing gear door strain. In some embodiments, the predetermined landing gear door strain criterion may be that the landing gear door strain is less than a predetermined landing gear door strain. In some embodiments, the predetermined landing gear door strain criterion may be that the landing gear door strain is greater than a predetermined landing door gear strain. In some embodiments, the predetermined landing gear door strain criterion may be that the landing gear door strain has changed by a predetermined amount over a predetermined period of time. An increase in strain indicates that the landing gear 20 is resting on the landing gear door 30. By way of example only, a strain may be measured by a strain gauge.

In some embodiments, the parameter detected by the one or more sensors 120 comprises a strain in the landing gear uplock 25. In the event of a loss of integrity of the landing gear uplock system, the forces on the landing gear uplock may be detectably changed because the landing gear uplock 25 is no longer supporting the full load of the landing gear 20. In such embodiments, the controller 130 is configured to issue the warning in the when controller 130 determines, based on the first signal and the second signal, that the landing gear uplock 25 is in the locked state and the strain in the landing gear uplock 25 is meets a predetermined landing gear uplock strain criterion. In some embodiments, the predetermined landing gear uplock strain criterion may be that landing gear uplock strain is equal to a predetermined landing gear uplock strain. In some embodiments, the predetermined landing gear uplock strain criterion may be that the landing gear uplock strain is less than a predetermined landing gear uplock strain. In some embodiments, the predetermined landing gear uplock strain criterion may be that the landing gear uplock strain is greater than a predetermined landing uplock gear strain. In some embodiments, the predetermined landing gear uplock strain criterion may be that the landing gear uplock strain has changed by a predetermined amount over a predetermined period of time.. By way of example only, a strain may be measured by a strain gauge.

In some embodiments, the one or more sensors 120 comprises a switch 120a configured to be activated by pressure being applied to the switch. In some embodiments, the switch 120a is positioned on the landing gear door 30 at a position at which the landing gear 20 contacts the landing gear door 30 if the landing gear uplock system fails to retain the landing gear 20 in the stowed position, as shown in Figure 1b. As such, the switch 120a is configured to be activated if the landing gear 20 is resting on the landing gear door 30 . In some embodiments, the switch 120a is positioned in the landing gear bay at a position at which the landing gear 20 contacts the switch 120a if the landing gear uplock 25 fails to retain the landing gear 20 in the stowed position. In such embodiments, the controller 130 is configured to issue the warning when the controller 130 determines, based on the first signal and the second signal, that the landing gear uplock 25 is in the locked state and that the switch 120a is activated. If the switch 120a is activated and the first signal indicates that the landing gear uplock 25 is in the locked state, this is an indication of a loss of integrity of the landing gear uplock system.

In some embodiments, the landing gear system 20 comprises an actuation system 50 configured to move the landing gear 20 between the first position and the second position.

In the embodiment shown in Figures 1a and 1b, the actuation system 50 comprises a landing gear actuator 24 and an actuator supply line 51 for supplying fluid to the landing gear actuator 24. The landing gear actuator 24 is configured, in use, to move the landing gear 20 between the stowed position and the extended position. The landing gear actuator 24 is depressurised when the landing gear 20 is locked in the stowed position by the landing gear uplock 25.

In some embodiments, the parameter detected by the one or more sensors 120 comprises a characteristic of the actuation system 50. In such embodiments, the controller 130 is configured to issue the warning when the controller 130 determines, based on the first signal and the second signal, that the landing gear uplock 25 is in the locked state and the characteristic of the landing gear actuator 24 meets a predetermined landing gear actuator criterion. In some embodiments, the predetermined landing gear actuator criterion may be that landing gear actuator characteristic is equal to a predetermined landing gear actuator characteristic. In some embodiments, the predetermined landing gear actuator criterion may be that the landing gear actuator characteristic is less than a predetermined landing gear actuator characteristic. In some embodiments, the predetermined landing gear actuator criterion may be that the landing gear actuator characteristic is greater than a predetermined landing gear actuator characteristic. In some embodiments, the predetermined landing gear actuator criterion may be that the landing gear actuator characteristic has changed by a predetermined amount over a predetermined period of time. By way of example, the actuator characteristic may be a distance of extension and/or retraction of the landing gear actuator 24, and the predetermined criterion may be related to a predetermined amount of extension and/or retraction.

In some embodiments, the characteristic of the actuation system 50 comprises a strain in the landing gear actuator 24. Movement of the landing gear 20 away from the stowed position may cause the landing gear actuator 24 to extend or retract, which may detectably change the forces on the landing gear actuator 24. In such embodiments, the controller 130 is configured to issue the warning when the controller 130 determines, based on the first signal and second signal, that landing gear uplock 25 is in the locked state and that strain in the landing gear actuator 24 meets a predetermined landing gear actuator strain criterion. In some embodiments, the predetermined landing gear actuator strain criterion may be that landing gear actuator strain is equal to a predetermined landing gear actuator strain. In some embodiments, the predetermined landing gear actuator strain criterion may be that the landing gear actuator strain is less than a predetermined landing gear actuator strain. In some embodiments, the predetermined landing gear actuator strain criterion may be that the landing gear actuator strain is greater than a predetermined landing gear actuator strain. In some embodiments, the predetermined landing gear actuator strain criterion may be that the landing gear actuator strain has changed by a predetermined amount over a predetermined period of time. By way of example only, a strain may be measured by a strain gauge.

In some embodiments, the characteristic of the actuation system 50 comprises pressure in the landing gear actuator 24 and/or the actuator supply line 51. Movement of the landing gear 20 away from the stowed position may cause the landing gear actuator 24 to extend or retract, which will detectably change the pressure in the landing gear actuator 24 and/or the actuator supply line 51. In such embodiments, the controller 130 is configured to issue the warning when the controller 130 determines, based on the first signal and second signal, that landing gear uplock 25 is in the locked state and that pressure in the landing gear actuator 24 and/or the actuator supply line 51 meets a predetermined landing gear pressure criterion. In some embodiments, the predetermined landing gear pressure criterion may be that landing gear actuator/actuator supply line pressure is equal to a predetermined landing gear actuator/actuator supply line pressure. In some embodiments, the predetermined landing gear pressure criterion may be that the landing gear actuator/actuator supply line pressure is less than a predetermined landing gear actuator/actuator supply line pressure. In some embodiments, the predetermined landing gear pressure criterion may be that the landing gear actuator/actuator supply line pressure is greater than a predetermined landing gear actuator/actuator supply line pressure. In some embodiments, the predetermined landing gear pressure criterion may be that the landing gear actuator/actuator supply line pressure has changed by a predetermined amount over a predetermined period of time. By way of example only, the one or more sensors 120 may comprise a pressure sensor.

In some embodiments, the characteristic of the actuation system 50 comprises a flow rate in the landing gear actuator 24 and/or the actuator supply line 51. Movement of the landing gear 20 away from the stowed position may cause the landing gear actuator 24 to extend or retract, which will detectably change the flow rate in the landing gear actuator 24 and/or the actuator supply line 51. In such embodiments, the controller 130 is configured to issue the warning when the controller 130 determines, based on the first signal and second signal, that the landing gear uplock 25 is in the locked state and the flow rate in the landing gear actuator 24 and/or the actuator supply line 51 meets a predetermined landing gear flow rate criterion. In some embodiments, the predetermined landing gear flow rate criterion may be that landing gear actuator/actuator supply line flow rate is equal to a predetermined landing gear actuator/actuator supply line flow rate. In some embodiments, the predetermined landing gear flow rate criterion may be that the landing gear actuator/actuator supply line flow rate is less than a predetermined landing gear actuator/actuator supply line flow rate. In some embodiments, the predetermined landing gear flow rate criterion may be that the landing gear actuator/actuator supply line flow rate is greater than a predetermined landing gear actuator/actuator supply line flow rate. In some embodiments, the predetermined landing gear flow rate criterion may be that the landing gear actuator/actuator supply line flow rate has changed by a predetermined amount over a predetermined period of time. By way of example only, the one or more sensors 120 may comprise a flow meter.

In some embodiments, not all of the illustrated sensors 120 may be present. For example, the only sensor in the detection system 100 may be the switch 120a. However, in some embodiments, the controller 130 is configured to receive a plurality of second signals from a respective plurality of sensors 120 and to determine a loss of integrity of the landing gear uplock system based on the plurality of second signals. Such a configuration may help to increase accuracy of the detection system 100. For example, at least one of the plurality of second signals may indicate a loss of integrity of the landing gear uplock system but may be ignored by the controller 130 if the other signals of the plurality of second signals do not indicate a loss of integrity of the landing gear uplock system, therefore suggesting that the at least one of the plurality of second signals is an anomalous signal.

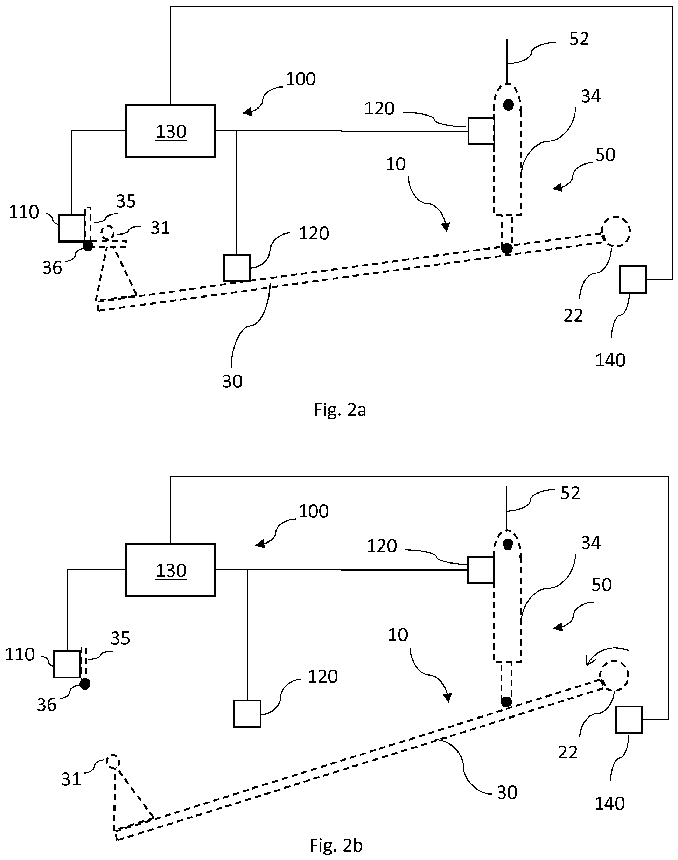

Figures 2a and 2b show schematic views of a landing gear system 10 (shown in dashed lines) comprising a detection system 100 according to another embodiment of the present invention. The detection system 100 and the landing gear system 10 are substantially the same as the detection system 100 and the landing gear system 10 shown in Figures 1a and 1b. In Figures 2a and 2b, the landing gear 20, landing gear actuator 24 and landing gear uplock system are not shown, for clarity. In some embodiments, the uplock sensor 110 configured to detect a position of the landing gear uplock 25 may be omitted.

In the embodiment shown in Figures 2a and 2b, the uplock sensor 110 is configured to detect whether the landing gear door uplock 35 is in the unlocked state or the locked state, and to issue a first signal indicating whether the landing gear door uplock 35 is in the unlocked state or the locked state. In some embodiments, the uplock sensor 110 comprises a proximity sensor and is configured to issue the first signal when the proximity sensor detects that the landing gear door uplock 35 is in the locked position. In the embodiment shown in Figures 2a and 2b, at least one of the one or more sensors 120 is configured to detect a parameter of the landing gear door 30.

In the embodiment shown in Figures 2a and 2b, the controller 130 is configured to issue a warning when the controller 130 determines, based on the first signal and the second signal, that the landing gear door uplock 35 is in the locked state and the parameter detected indicates that the landing gear door 30 is not in the closed position. Figure 2a shows the landing gear door 30 being held in the closed position by the landing gear door uplock 35. Figure 2b shows the landing gear door 30 at a position between the closed position and the open position because the landing gear door uplock system has lost integrity. For example, the landing gear door uplock 35 and/or the landing gear engager 31 may have become bent, broken or otherwise physically failed, in such a way that the uplock sensor 110 still senses a part of the landing gear door uplock 35 that suggests the (whole) landing gear door uplock 35 in the locked state, yet the landing gear door uplock 35 actually is not correctly holding the landing gear door 30 in the closed position. The detection system 100 of Figures 2a and 2b is configured to issue the warning when the landing gear system 10 is in the state shown in Figure 2b, and not when the landing gear system 10 is in the state shown in Figure 2a.

In some embodiments, the parameter detected by the one or more sensors 120 comprises rotation of the landing gear door 30 about the pivot 32. The landing gear door 30 may rotate about the pivot 32 under gravity in the event of a loss of integrity of the landing gear door uplock system. In such embodiments, the controller 130 is configured to issue the warning when the controller 130 determines, based on the first signal and the second signal, that the landing gear door uplock 35 is in the locked state and the landing gear door 30 is at an angle of rotation about the pivot 32 that meets a predetermined landing gear door rotation criterion. In some embodiments, the predetermined landing gear door rotation criterion may be that landing gear door rotation is equal to a predetermined landing gear door rotation. In some embodiments, the predetermined landing gear door rotation criterion may be that the landing gear door rotation is less than a predetermined landing gear door rotation. In some embodiments, the predetermined landing gear door rotation criterion may be that the landing gear door rotation is greater than a predetermined landing gear door rotation. In some embodiments, the predetermined landing gear door rotation criterion may be that the landing gear door rotation has changed by a predetermined amount over a predetermined period of time. By way of example only, rotation of the landing gear door 30 about the pivot 32 may be measured by a proximity sensor, a RVDT or a LVDT.

In some embodiments, the parameter detected by the one or more sensors 120 comprises a strain in the landing gear door 30. In the event of a loss of integrity in the landing gear door uplock system, the forces on the landing gear door 30 are detectably changed. In such embodiments, the controller 130 is configured to issue the warning when the controller 130 determines, based on the first signal and the second signal, that the landing gear door uplock 35 is in the locked state and the strain in the landing gear door 30 meets a predetermined landing gear door strain criterion. In some embodiments, the predetermined landing gear door strain criterion may be that landing gear door strain is equal to a predetermined landing gear door strain. In some embodiments, the predetermined landing gear door strain criterion may be that the landing gear door strain is less than a predetermined landing gear door strain. In some embodiments, the predetermined landing gear door strain criterion may be that the landing gear door strain is greater than a predetermined landing gear door strain. In some embodiments, the predetermined landing gear door strain criterion may be that the landing gear door strain has changed by a predetermined amount over a predetermined period of time. By way of example only, a strain may be measured by a strain gauge.

In some embodiments, the parameter detected by the one or more sensors 120 comprises a strain in the landing gear door uplock 35. In the event of a loss of integrity of the landing gear door uplock system, the forces on the landing gear door uplock 35 are detectably changed because the landing gear door uplock 35 is no longer supporting the full load of the landing gear door 30. In such embodiments, the controller 130 is configured to issue the warning in the event the controller 130 determines, based on the first signal and the second signal, that the landing gear door uplock 35 is in the locked state and the strain in the landing gear door uplock 35 meets a predetermined landing gear door uplock strain criterion. In some embodiments, the predetermined landing gear door uplock strain criterion may be that landing gear door uplock strain is equal to a predetermined landing gear door uplock strain. In some embodiments, the predetermined landing gear door uplock strain criterion may be that the landing gear door uplock strain is less than a predetermined landing gear door uplock strain. In some embodiments, the predetermined landing gear door uplock strain criterion may be that the landing gear door uplock strain is greater than a predetermined landing gear door uplock strain. In some embodiments, the predetermined landing gear door uplock strain criterion may be that the landing gear door uplock strain has changed by a predetermined amount over a predetermined period of time. By way of example only, a strain may be measured by a strain gauge.

In this embodiment, the landing gear system 20 comprises an actuation system 50 configured to move the landing gear door 30 between the first position and the second position. The actuation system 50 comprises a landing gear door actuator 34 and an actuator supply line 52 for supplying fluid to the landing gear door actuator 34. The landing gear door actuator 34 is configured, in use, to move the landing gear door 30 between the closed position and the open position. The landing gear door actuator 34 is depressurised when the landing gear door 30 is locked in the closed position by the landing gear door uplock 35.

In some embodiments, the parameter detected by the one or more sensors 120 comprises a characteristic of the actuation system 50. In such embodiments, the controller 130 is configured to issue the warning when the controller 130 determines, based on the first signal and the second signal, that the landing gear door uplock 35 is in the locked state and the characteristic of the landing gear door actuator 34 meets a predetermined landing gear door actuator criterion. In some embodiments, the predetermined landing gear door actuator criterion may be that the landing gear door actuator characteristic is equal to a predetermined landing gear door actuator characteristic. In some embodiments, the predetermined landing gear door actuator criterion may be that the landing gear door actuator characteristic is less than a predetermined landing gear door actuator characteristic. In some embodiments, the predetermined landing gear door actuator criterion may be that the landing gear door actuator characteristic is greater than a predetermined landing gear door actuator characteristic. In some embodiments, the predetermined landing gear door actuator criterion may be that the landing gear door actuator characteristic has changed by a predetermined amount over a predetermined period of time. By way of example, the actuator characteristic may be a distance of extension and/or retraction of the landing gear door actuator 34, and the predetermined criterion may be related to a predetermined amount of extension and/or retraction.

In some embodiments, the characteristic of the actuation system 50 comprises a strain in the landing gear door actuator 34. Movement of the landing gear door 30 away from the closed position may cause the landing gear door actuator 34 to extend or retract, which may detectably change the forces on the landing gear door actuator 34. In such embodiments, the controller 130 is configured to issue the warning when the controller 130 determines, based on the first signal and second signal, that the landing gear door uplock 35 is in the locked state and the strain in the landing gear door actuator 34 meets a predetermined landing gear door actuator strain criterion. In some embodiments, the predetermined landing gear door actuator strain criterion may be that landing gear door actuator strain is equal to a predetermined landing gear door actuator strain. In some embodiments, the predetermined landing gear door actuator strain criterion may be that the landing gear door actuator strain is less than a predetermined landing gear door actuator strain. In some embodiments, the predetermined landing gear door actuator strain criterion may be that the landing gear door actuator strain is greater than a predetermined landing gear door actuator strain. In some embodiments, the predetermined landing gear door actuator strain criterion may be that the landing gear door actuator strain has changed by a predetermined amount over a predetermined period of time. By way of example only, a strain may be measured by a strain gauge.

In some embodiments, the characteristic of the actuation system 50 comprises pressure in the landing gear door actuator 34 and/or the actuator supply line 52. Movement of the landing gear door 30 away from the closed position may cause the landing gear door actuator 34 to extend or retract, which may detectably change the pressure in the landing gear door actuator 34 and/or the actuator supply line 52. In such embodiments, the controller 130 is configured to issue the warning when the controller 130 determines, based on the first signal and second signal, that the landing gear door uplock 35 is in the locked state and the pressure in the landing gear door actuator 34 and/or the actuator supply line 52 meets a predetermined landing gear door pressure criterion. In some embodiments, the predetermined landing gear door pressure criterion may be that landing gear door actuator/actuator supply line pressure is equal to a predetermined landing gear door actuator/actuator supply line pressure. In some embodiments, the predetermined landing gear door pressure criterion may be that the landing gear door actuator/actuator supply line pressure is less than a predetermined landing gear door actuator/actuator supply line pressure. In some embodiments, the predetermined landing gear door pressure criterion may be that the landing gear door actuator/actuator supply line pressure is greater than a predetermined landing gear door actuator/actuator supply line pressure. In some embodiments, the predetermined landing gear door pressure criterion may be that the landing gear door actuator/actuator supply line pressure has changed by a predetermined amount over a predetermined period of time. By way of example only, the one or more sensors 120 may comprise a pressure sensor.

In some embodiments, the characteristic of the actuation system 50 comprises a flow rate in the landing gear door actuator 34 and/or the actuator supply line 52. Movement of the landing gear door 30 away from the closed position may cause the landing gear door actuator 34 to extend or retract, which may detectably change the flow rate in the landing gear door actuator 34 and/or the actuator supply line 52. In such embodiments, the controller 130 is configured to issue the warning when the controller 130 determines, based on the first signal and second signal, that the landing gear door uplock 35 is in the locked state and the flow rate in the landing gear door actuator 34 and/or the actuator supply line 52 meets a predetermined landing gear door flow rate criterion. In some embodiments, the predetermined landing gear door flow rate criterion may be that landing gear door actuator/actuator supply line flow rate is equal to a predetermined landing gear door actuator/actuator supply line flow rate. In some embodiments, the predetermined landing gear door flow rate criterion may be that the landing gear door actuator/actuator supply line flow rate is less than a predetermined landing gear door actuator/actuator supply line flow rate. In some embodiments, the predetermined landing gear door flow rate criterion may be that the landing gear door actuator/actuator supply line flow rate is greater than a predetermined landing gear door actuator/actuator supply line flow rate. In some embodiments, the predetermined landing gear door flow rate criterion may be that the landing gear door actuator/actuator supply line flow rate has changed by a predetermined amount over a predetermined period of time. By way of example only, the one or more sensors 120 may comprise a flow meter.

A typical landing gear extension process may be initiated in response to a command received based on an input from the pilot, and may comprise the generation of a plurality of signals, each signal causing a particular part of the process to commence. The landing gear extension process is carried out by a landing gear system 10. In some embodiments, the landing gear extension process comprises switching the landing gear door uplock 35 to the unlocked state, moving the landing gear door 30 from the closed position to the open position and, when a signal is received to indicate that the landing gear door 30 has reached the open position, switching the landing gear uplock 25 to an unlocked state and extending the landing gear 20 from the stowed position to the extended position. Switching of the uplocks 25, 35 to their respective unlocked states may comprise moving the uplocks 25, 35 from their respective locked positions to their respective unlocked positions.

In some embodiments, the landing gear system 10 is configured to switch the landing gear uplock 25 from the locked state to the unlocked state to release the landing gear 20 only when the landing gear door 30 is in the open position. In some such embodiments, the detection system 100 is configured to detect, during such a landing gear extension process, a loss of integrity of the landing gear uplock system. For example, the controller 130 may be configured to issue the warning when the controller 130 determines, based on the first signal and the second signal, that the landing gear 20 has moved away from the stowed position before the landing gear door 30 has reached the open position. This would indicate that the landing gear 20 was resting on the landing gear door 30 before the landing gear extension process was commenced.

In some such embodiments, the detection system 100 comprises a door sensor 140 (as shown in Figures 2a and 2b) configured to issue a door open signal when the door sensor 140 detects that the landing gear door 30 is in the open position. The controller 130 is configured to issue the warning when the controller 130 determines, based on the first signal, the second signal and the door open signal, that, before the controller 130 received the door open signal, the landing gear 20 was not in the stowed position when the landing gear uplock 25 was in the locked state.

As will be appreciated from the above description, in some embodiments, the detection system 100 is for detection of a failure of the landing gear uplock system. The landing gear uplock 25 is configured, in a locked position, to engage with the landing gear engager 21 to hold the landing gear 20 in an up and locked position. That is, the landing gear 20 is in the stowed position and locked by the landing gear uplock 25. The detection system 100 may comprise a first detector to detect a position of the landing gear uplock 25 and to emit a first indication indicating the position of the uplock, a second detector to detect that the landing gear 20 has moved from the up and locked position and to emit a second indication indicating that the landing gear 20 has moved from the up and locked position, and a controller 130 configured to issue a failure warning if it is determined, based on the first and second indications, that the landing gear uplock 25 is in the locked position and the landing gear 20 is not in the up and locked position.

Some embodiments of the present invention provide a detection system in isolation. In some embodiments, the detection system is the detection system 100 described above with reference to Figures 1a and 1b or the detection system 100 described above with reference to Figures 2a and 2b. Some embodiments of the present invention provide a landing gear system comprising the detection system 100. In some embodiments, the landing gear system is the landing gear system 10 described above with reference to Figures 1a and 1b or the landing gear system 10 described above with reference to Figures 2a and 2b. In some embodiments, the landing gear system 10 and/or and the detection system 100 are comprised in a landing gear extension and retraction system (not shown).

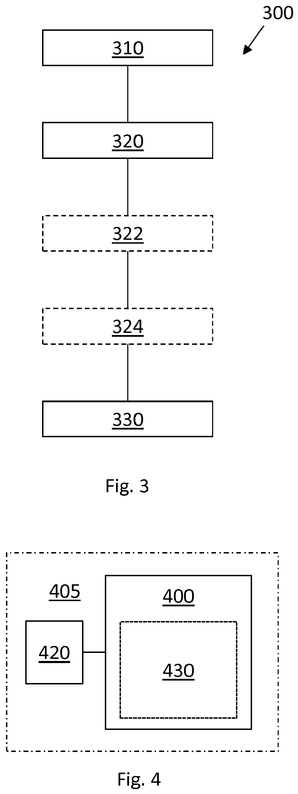

Another aspect of the present invention is a method of detecting the integrity of an uplock system of a landing gear system of an aircraft. Figure 3 is a flow diagram showing an example of a method 300 according to an embodiment of the present invention. The landing gear system comprises an element that is movable between a first position and a second position, and an uplock system comprising an engager and an uplock. The engager is connected to the element. The uplock is switchable between a locked state and an unlocked state, and is configured, when in the locked position, to engage with the engager to lock the element in the first position. By way of example, the element may be a landing gear movable between a stowed position and an extended position. The element may alternatively be a landing gear door movable between a closed position and an open position.

The method 300 of this embodiment comprises: determining 310 whether the uplock is in the unlocked state or the locked state based on a first signal received from an uplock sensor; detecting 320 a parameter of the landing gear system based on a second signal received from a landing gear sensor; and issuing 330 a warning when it is determined, based on the first signal and the second signal, that the uplock is in the locked state and the parameter detected indicates that the element is not in the first position. The method may be carried out by one of the controllers 130 discussed above.

By way of example, the detecting 320 may comprise one or more of: detecting a strain in a component of the landing gear system, detecting a pressure in a component of the landing gear system, detecting a position of a component of the landing gear system and detecting movement of a component of the landing gear system. The landing gear sensor may comprise one or more of: a proximity sensor, a switch, a rotary variable differential transformer, a linear variable differential transformer, a strain gauge, a pressure sensor and a flow meter.

In some embodiments, as shown by way of dashed blocks in Figure 3, the aircraft comprises a further landing gear system and the method 300 comprises: detecting 322 a parameter of the further landing gear system based on a third signal received from a further landing gear sensor of the further landing gear system, comparing 324 the third signal to the second signal, and issuing 330 the warning when the third signal differs from the second signal by at least a predetermined amount.

Comparing 340 the third signal to the second signal can be advantageous because the parameter of the landing gear system and the further landing gear system that is detected may be affected by conditions other than a failure of an uplock or failure of an engager, for example conditions of the aircraft. If the difference between the second signal and the third signal does is not at least the predetermined amount, then it may be concluded that the parameter detected has not been affected by a loss of integrity of the uplock system.

In some embodiments, wherein the element is a landing gear and the landing gear system comprises a landing gear door, the method 300 comprises: determining an open position of the landing gear door based on a door open signal received from a door sensor; and issuing the warning when it is determined, based on the first signal, the second signal and the door open signal, that, before the controller received the door open signal, the landing gear was not in the stowed position when the uplock was in the locked state.

In some embodiments, the locked state of an uplock is a locked position of the uplock, and an unlocked state of the uplock is an unlocked position of the uplock.

Figure 4 shows a schematic diagram of a non-transitory computer-readable storage medium 400 according to an embodiment of the present invention. The non-transitory computer-readable storage medium 400 stores instructions 430 that, if executed by a processor 420 of a controller 405 of a landing gear system of an aircraft, cause the processor 420 to perform a method according to an embodiment of the present invention. In some embodiments, the controller 405 is the controller 130 as described above with reference to Figures 1a and 1b, or the controller 130 as described above with reference to Figures 2a and 2b. The instructions 430 comprise instructions to perform the operations of the method 300 described above with reference to Figure 3.

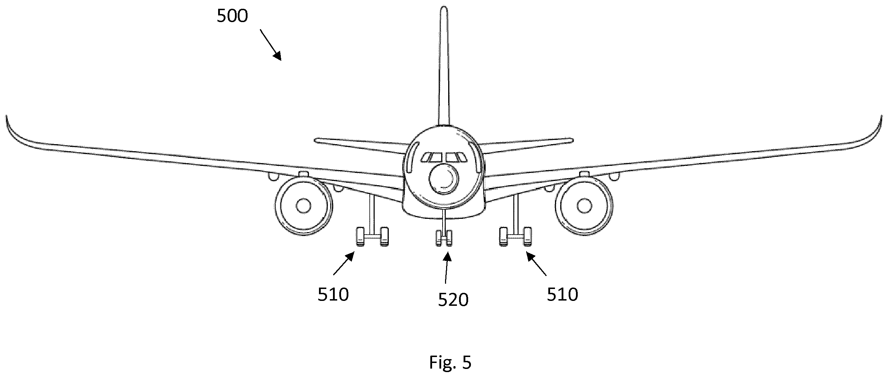

Figure 5 shows a schematic diagram of an aircraft 500 in accordance with an embodiment of the present invention. In this embodiment, the aircraft 500 comprises two main landing gears 510 and a nose landing gear 520. In other embodiments, the aircraft may comprise fewer or more landing gears 510, 520 that the aircraft 500 shown in Figure 5. In some embodiments, the aircraft 500 also comprises the non-transitory computer-readable storage medium 400 (not shown) discussed above with reference to Figure 4. In some embodiments, the aircraft 500 comprises a detection system (not shown) according to an embodiment of the invention, such as the detection system 100 discussed above with reference to Figures 1a and 1b, or the detection system 100 discussed above with reference to Figures 2a and 2b. In some embodiments, the aircraft 500 comprises a landing gear system (not shown) according to an embodiment of the present invention, such as the landing gear system 20 discussed above with reference to Figures 1a and 1b, or the landing gear system 20 discussed above with reference to Figures 2a and 2b.

It is to noted that the term "or" as used herein is to be interpreted to mean "and/or", unless expressly stated otherwise.

The above embodiments are to be understood as non-limiting illustrative examples of how the present invention, and aspects of the present invention, may be implemented. Further examples of the present invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the present invention, which is defined in the accompanying claims.

## Claims

1. A detection system for detecting the integrity of an uplock system of a landing gear system, the landing gear system comprising an element that is movable between a first position and a second position, and an uplock system comprising an engager and an uplock, wherein the engager is connected to the element, and wherein the uplock is switchable from an unlocked state, in which the uplock is disengaged from the engager, to a locked state to engage with the engager to lock the element in the first position, wherein the detection system comprises:
an uplock sensor configured to detect whether the uplock is in the unlocked state or the locked state and to issue a first signal indicating whether the uplock is in the unlocked state or the locked state;
one or more sensors configured to detect a parameter of the landing gear system and to issue a second signal to indicate the parameter detected; and
a controller configured to issue a warning when the controller determines, based on the first signal and the second signal, that the uplock is in the locked state and the parameter detected indicates that the element is not in the first position, the warning indicating a loss of integrity of the uplock system.

2. The detection system according to claim 1, wherein the element is movable between the first position and the second position by rotation about a pivot,
wherein the parameter comprises rotation of the element about the pivot, and
wherein the controller is configured to issue the warning when the controller determines, based on the first signal and the second signal, that the uplock is in the locked state and the element is at an angle of rotation about the pivot that meets a predetermined element rotation criterion.

3. The detection system according to any one of the preceding claims,
wherein the parameter comprises a strain in the element, and the controller is configured to issue the warning when the controller determines, based on the first signal and the second signal, that the uplock is in the locked state and the strain in the element meets a predetermined element strain criterion;
or wherein the parameter comprises a strain in the uplock, and the controller is configured to issue the warning when the controller determines, based on the first signal and the second signal, that the uplock is in the locked state and the strain in the uplock meets a predetermined uplock strain criterion.

4. The detection system according to any one of the preceding claims, wherein the landing gear system comprises an actuation system configured to move the element between the first position and the second position, the actuation system comprising an actuator, wherein the actuator is depressurised when the element is locked in the first position by the uplock,
wherein the parameter comprises a characteristic of the actuation system, and
wherein the controller is configured to issue the warning when the controller determines, based on the first signal and second signal, that the uplock is in the locked state and the characteristic of the actuator meets a predetermined actuator criterion.

5. The detection system according to claim 4, wherein the characteristic of the actuation system comprises a strain in the actuator, and
wherein the controller is configured to issue the warning when the controller determines, based on the first signal and second signal, that the uplock is in the locked state and the strain in the actuator meets a predetermined actuator strain criterion.

6. The detection system according to claim 4, wherein the actuation system comprises an actuator supply line for supplying fluid to the actuator,
wherein the characteristic of the actuation system comprises a flow rate or pressure in the actuator and/or in the actuator supply line, and
wherein the controller is configured to issue the warning when the controller determines, based on the first signal and second signal, that the uplock is in the locked state and the flow rate or pressure, respectively, in the actuator and/or in the actuator supply line meets a predetermined flow rate criterion or pressure criterion, respectively.

7. The detection system according to any one of the preceding claims,
wherein the element is a landing gear door, and the first position is a closed position of the door relative to a landing gear bay and the second position is an open position of the door relative to the landing gear bay, and
wherein the uplock is a landing gear door uplock.

8. The detection system according to any one of claims 1 to 6, wherein the element is a landing gear, and the first position is a stowed position of the landing gear relative to a landing gear bay and the second position is an extended position of the landing gear relative to the landing gear bay, and
wherein the uplock is a landing gear uplock.

9. The detection system according to claim 8, wherein the landing gear system comprises a landing gear door movable between a closed position in which the landing gear door at least partially covers an opening of the landing gear bay in which the landing gear is located when the landing gear is in the stowed position, and an open position in which the landing gear is moveable through the opening between the stowed position and the extended position,
wherein the parameter comprises a strain in the landing gear door, and
wherein the controller is configured to issue the warning when the controller determines, based on the first signal and the second signal, that the uplock is in the locked state and the strain in the landing gear door meets a predetermined landing gear door strain criterion.

10. The detection system according to claim 8 or claim 9, wherein the one or more sensors comprises a switch configured to be activated by pressure being applied to the switch,
wherein the switch is positioned on the landing gear door at a position at which the landing gear contacts the landing gear door if the uplock fails to retain the landing gear in the stowed position, and
wherein the controller is configured to issue the warning when the controller determines, based on the first signal and the second signal, that the uplock is in the locked state and the switch is activated.

11. The detection system according to any one of claims 8 to 10, wherein the landing gear system is configured to switch the uplock from the locked state to the unlocked state only when the landing gear door is in the open position,
wherein the detection system comprises a door sensor configured to issue a door open signal when the door sensor detects that the landing gear door is in the open position, and
wherein the controller is configured to issue the warning when the controller determines, based on the first signal, the second signal and the door open signal, that, before the controller received the door open signal, the landing gear was not in the stowed position when the uplock was in the locked state.

12. A detection system for detecting failure of a landing gear uplock system, the landing gear uplock system comprising a landing gear uplock and an engager, the engager being connected to a landing gear, and the landing gear uplock configured, in a locked position, to engage with the engager to hold the landing gear in an up and locked position, the detection system comprising:
a first detector to detect a position of the uplock and to emit a first indication indicating the position of the uplock;
a second detector to detect that the landing gear has moved from the up and locked position and to emit a second indication indicating that the landing gear has moved from the up and locked position; and
a controller configured to issue a failure warning if it is determined, based on the first and second indications, that the landing gear uplock is in the locked position and the landing gear is not in the up and locked position.

13. A landing gear system comprising the detection system according to any one of claims 1 to 12.

14. A method of detecting the integrity of an uplock system of a landing gear system of an aircraft, the landing gear system comprising an element that is movable between a first position and a second position, and an uplock system comprising an engager and an uplock, wherein the engager is connected to the element, and wherein the uplock is switchable from an unlocked state to a locked state to engage with the engager to lock the element in the first position, wherein the method comprises:
determining whether the uplock is in the unlocked state or the locked state based on a first signal received from an uplock sensor;
detecting a parameter of the landing gear system based on a second signal received from a landing gear sensor; and
issuing a warning when it is determined, based on the first signal and the second signal, that the uplock is in the locked state and the parameter detected indicates that the element is not in the first position.

15. A method according to claim 14, wherein the aircraft comprises a further landing gear system, the method comprising:
detecting a parameter of the further landing gear system based on a third signal received from a further landing gear sensor of the further landing gear system;
comparing the third signal to the second signal; and
issuing the warning when the third signal differs from the second signal by at least a predetermined amount.

16. A non-transitory computer-readable storage medium storing instructions that, if executed by a processor of a controller of a landing gear system of an aircraft, cause the processor to carry out the method of claim 14 or claim 15.

17. An aircraft comprising a detection system according to any one of claims 1 to 12, or comprising a landing gear system according to claim 13, or comprising a non-transitory computer-readable storage medium according to claim 16.
